# EUROPÄISCHE PATENTANMELDUNG

(11) **EP 3 489 843 A1**
(43) Veröffentlichungstag der Anmeldung: **29.05.2019**
(21) Anmeldenummer: 17203256.7
(22) Anmeldetag: 23.11.2017
(51) Int. Cl.: G06F 17/30

(54) **FORENSISCHE SUCHE IN DATENBANK**

(71) Anmelder: PKE Holding AG, 1100 Wien (AT)
(72) Erfinder: FEST, Florian Rudolf, 2490 Haschendorf (AT); KERSCHBAUMER, Joachim, 2500 Baden (AT); KLOIHOFER, Werner, 4210 Gallneukirchen (AT); KUHN, Walter, 1060 Wien (AT)
(74) Vertreter: Burgstaller, Peter

(57) **Zusammenfassung**

Computerimplementiertes Verfahren zur forensischen Suche nach einem Objekt in einer Datenbank,
welche Datenbank ein Objektattribut (4, 5) des Objektes umfasst, welches Objektattribut (4, 5) durch einen Zahlenwert und/oder eine Objekteigenschaft beschreibt oder eine Bewegung des Objektes durch einen Zahlenwert und/oder durch einen Vektor beschreibt,
wobei ein Objektsuchbereich (1) mit einer unteren Objektsuchbereichsgrenze (2) und einer oberen Objektsuchbereichsgrenze (3) definiert wird, wobei
die Objekte aufweisend ein Objektattribut (4, 5) markiert werden, welcher Objektattributwert (4, 5) in den Objektsuchbereich (1) oder außerhalb des Objektsuchbereiches (1) fällt, und eine einen Zahlenwert umfassende Objektattributdifferenz ermittelt wird, um welche Objektattributdifferenz sich das Objektattribut (4, 5) eines markierten Objektes von einem im Objektsuchbereich (1) oder außerhalb des Objektsuchbereiches (1) gelegenen Objektsuchbereichswert unterscheidet.

## Beschreibung

Diese Erfindung betrifft ein Computerimplementiertes Verfahren zur forensischen Suche nach einem Objekt in einer Datenbank,
welche Datenbank ein Objektattribut des Objektes umfasst, welches Objektattribut durch einen Zahlenwert und/oder einen Vektor eine Objekteigenschaft beschreibt oder eine Bewegung des Objektes durch einen Zahlenwert und/oder durch einen Vektor beschreibt,
wobei ein Objektsuchbereich mit einer unteren Objektsuchbereichsgrenze und einer oberen Objektsuchbereichsgrenze definiert wird.

Ein Attribut eines Objektes kann beispielsweise eine aus einem Bildmaterial detektierbare Trajektorie eines Objektes sein, welche Trajektorie zumindest eine Koordinatenangabe und Zeitangabe umfasst. Ein Attribut kann weiters einen Geschwindigkeitswert und/oder eine Distanzangabe umfassen.

Ein Attribut eines Objektes kann beispielsweise auch eine Farbe, Form, eine Größe, eine Identifikation des Objektes und/oder eine Klassifizierung beschreiben. Ein Attribut kann weiters beispielsweise einen Zeitwert (Beginnzeitwert, Endzeitwert, Beobachtungszeitwert) und/oder einen Zeitabstand des Objektes umfassen.

Im Rahmen der Offenbarung der Erfindung kann ein Objekt auch eine Person oder ein Tier sein. Sofern im Rahmen der Offenbarung dieser Erfindung nicht explizit auf ausschließlich ein Objekt beziehungsweise ein Tier hingewiesen wird, steht der Begriff Objekt für eine Person, ein Tier und gleichsam für ein Objekt.

US20080204569A1 offenbart ein Verfahren zur Suche nach ähnlichen Objekten in einem Bildmaterial, wobei in US20080204569A1 keine eindeutige Definition enthalten ist, was unter ähnlichen Objekten zu verstehen ist.

Das in US9269243B2 offenbarte Verfahren umfasst eine Suche nach ähnlichen Werten, wobei hier ein in US9269243B2 nicht definierter Algorithmus zum Einsatz kommt (siehe [061]).

Es ist im Bereich der Forensik eine grundlegende Aufgabe, nach Auffälligkeiten in einer Datenbank zu suchen. Die Dokumente nach dem Stand der Technik versuchen dieses Problem durch die Suche nach ähnlichen Attributen in der Datenbank zu lösen, wobei der Begriff der Ähnlichkeit in den oben angeführten Dokumenten nicht derart offenbart ist, dass ein Fachmann die in den jeweiligen Dokumenten offenbarten Verfahren ausführen könnte. Der Fachmann erkennt, dass sohin die nach dem Stand der Technik bekannten Verfahren nicht hinreichend genaue Informationen liefern. Dieser Umstand ist in Anbetracht der aktuellen Bedrohungen und dem Streben nach einer raschen Aufklärung, welche eine effektive und genaue forensische Suche bedingt, nicht zufriedenstellend.

Die Erfindung löst das grundlegende Problem der Forensik so, dass als Ergebnis (oder als auch ein Suchergebnis)
die Objekte aufweisend ein Objektattribut markiert werden, welcher Objektattributwert in den Objektsuchbereich oder außerhalb des Objektsuchbereiches fällt, und
eine einen Zahlenwert umfassende Objektattributdifferenz ermittelt wird, um welche Objektattributdifferenz sich das Objektattribut eines markierten Objektes von einem im Objektsuchbereich oder außerhalb des Objektsuchbereiches gelegenen Objektsuchbereichswert unterscheidet.

Im Unterschied zu den Dokumenten nach dem Stand der Technik ist der dem erfindungs-gemäßen Verfahren zu Grunde liegende Begriff der Ähnlichkeit eindeutig und klar durch die einen Zahlenwert umfassende Objektattributdifferenz definiert. Prinzipiell kann davon ausgegangen werden, dass je höher der Zahlenwert der Objektattributdifferenz ist, desto weniger ähnlich sind die Attribute.

Durch die eindeutige Definition des Begriffes der Ähnlichkeit wird das Suchergebnis genauer. Das Ergebnis ist zudem auch nachvollziehbar.

Da die Objektattributdifferenz einen Zahlenwert umfasst, ist das Ergebnis der erfindungsgemäßen forensischen Suche unter anderem nach diesem Zahlenwert automatisch oder manuell ordenbar. Der Fachmann erkennt, dass die Erfindung nicht auf einen Zahlenwert an sich beschränkt sein muss, sondern im weiteren Sinn durch den Begriff Zahlenwert ein ordenbarer Wert gemeint ist. Der ordenbare Wert kann beispielsweise auch ein Buchstabe sein, welcher im Sinne des Alphabetes geordnet werden kann und sohin ein Äquivalent zu einem Zahlenwert ist.

Durch das Ordnen der Suchergebnisse erhält der Benutzer sehr rasch einen Überblick über die in der Datenbank durch Objektattribute festgehaltenen Ereignisse in Zusammenhang mit einem Objekt. Hierdurch werden die Objekte aufweisend zumindest ein zu dem Objektsuchbereichswert ähnliches Objektattribut in einer für den Benutzer erkennbaren übergeordneten, visuell hervorstechenden Position angezeigt. Das Suchergebnis ist sohin genauer.

Bei Angabe des Suchergebnisses in einer geordneten Liste ist das Suchergebnis weiters für den Benutzer nachvollziehbar. Insbesondere bei einer Sortierung nach einer Kombination aus Attributdifferenzen und Attributwerten ist die Sortierung durch den Benutzer steuerbar.

Der Suchbereichswert ist ein für den Benutzer interessanter Wert. Das erfindungsgemäße Verfahren erlaubt die Sortierung der Attributdifferenzen und/oder der Objektattribute um den Sollbereichswert.

Der Suchbereichswert kann durch die Auswahl eines Objektes oder mehrerer Objekte generiert werden, welches Objekt beziehungsweise welche Objekte ein Attribut gleich dem gewählten Suchbereichswert aufweisen.

Die Objektsuchgrenzen können bei dem erfindungsgemäßen Verfahren wie auch bei den Verfahren nach dem Stand der Technik durch den Benutzer definiert werden. Bei einer Wahl eines zu kleinen Objektsuchbereiches kann ein Objekt aufweisend ein außerhalb des Objektsuchbereiches fallenden Objektattribut nicht detektiert oder markiert werden, obwohl dieses Objekt eigentlich für die forensische Suche interessant wäre. Das erfindungsgemäße Verfahren kann sich unter anderem auch dadurch auszeichnen, dass auch die Objekte aufweisend ein außerhalb des Objektsuchbereiches fallenden Objektattribut in einer für den Benutzer aufbereiteten Art und Weise angezeigt werden.

Die Objektattribute, welche außerhalb des Suchbereiches liegen, können eine dementsprechende hohe Attributdifferenz in Hinblick auf das eine gesuchte Attribut, aber bei einem weiteren gesuchten Attribut eine geringere Attributdifferenz aufweisen. In vorteilhafter Weise wird ein Objekt nur dann in einer für den Benutzer erkennbaren übergeordneten, visuell hervorstechenden Position angezeigt, wenn ein hohes Maß an Ähnlichkeit zu dem Objektsuchbereichswert besteht.

Bei der Markierung eines Objekts aufweisend ein Objektattribut, welches Objektattribut außerhalb des Objektsuchbereiches fällt, kann eine einen Zahlenwert umfassende Objektattributdifferenz ermittelt werden, um welche Objektattributdifferenz sich das Objektattribut eines angezeigten Objektes von der unteren Objektsuchbereichsgrenze oder von der oberen Objektsuchbereichsgrenze unterscheidet.

Bei einer forensischen Suche wird zumeist nach Ereignissen und in weiterer Folge nach Objekten in einem gewissen Suchbereich - zumeist eine Zeitspanne - gesucht. Falls die Zeitspanne nicht richtig oder zu eng gewählt wird, werden Ereignisse und in weiterer Folge Objekte ausgeklammert, obwohl diese im Rahmen der forensischen Suche doch interessant wären.

Das erfindungsgemäße Verfahren kann Suchergebnisse liefern, welche Objektattribute anzeigen, die in den gewählten Objektsuchbereich fallen oder nicht.

Das erfindungsgemäße Verfahren kann für die unterschiedlichen Attribute des Objektes mehrfach durchgeführt werden. Die einzelnen Suchergebnisse sind miteinander verknüpfbar. Es können die einzelnen Suchergebnisse zur Generierung eines Gesamt-Suchergebnisses unterschiedlich gewichtet werden.

Die Erfindung ist keinesfalls darauf beschränkt, dass das Suchergebnis nur Attributdifferenzen umfasst. Es können auch Attributdifferenzen mit Objektattributen im Suchergebnis angezeigt werden. Dem entsprechend ist die oben beschriebene Sortierung keinesfalls auf eine Reihung der Attributdifferenzen beschränkt. Es können auch Objektattribute und Attributdifferenzen in einer miteinander verknüpften Weise geordnet werden.

Der Objektsuchbereich kann so definiert sein, dass die untere Objektsuchbereichsgrenze und die obere Objektsuchbereichsgrenze ident sind. Hierdurch kann in einer sehr einfachen Weise ein binäres Suchkriterium geschaffen werden.

Die untere Objektsuchbereichsgrenze und/oder die obere Objektsuchbereichsgrenze kann so gewählt werden, dass diese Grenze einen minimalen Zahlenwert oder Vektor beziehungsweise einen maximalen Zahlenwert oder Vektor der in der Datenbank gespeicherten Objektattribute annimmt.

Bei Wahl des minimalen Zahlenwertes der Datenbank als untere Objektsuchbereichsgrenze und des maximalen Zahlenwertes der Datenbank als obere Objektsuchbereichsgrenze wird die gesamte Datenbank durchsucht. Diese Suche entspricht einer Suche mit den Objektsuchbereichsgrenzen "minus unendlich" bis "plus unendlich".

Es kann der die untere Objektsuchbereichsgrenze beziehungsweise die obere Objektsuchbereichsgrenze definierende Zahlenwert um einen Faktor erhöht werden.
Der Objektsuchbereichswert kann ein nach statistischen Methoden abgeleiteter Wert der in den Objektsuchbereich fallenden Objektattribute sein.

Der Objektsuchbereichswert kann ein Mittelwert oder ein gewichteter Mittelwert oder ein Median zwischen der unteren Objektsuchbereichsgrenze und der oberen Objektsuchbereichsgrenze sein.

Ein Mittelwert oder ein gewichteter Mittelwert ist im Rahmen der Durchführung des erfindungsgemäßen Verfahrens automatisch generierbar.
Der Objektsuchbereichswert kann auch durch den Benutzer wählbar sein.

Die Datenbank kann auch durch einen Sensor ermittelbare und eine Funktion eines Gerätes beschreibende Sensordaten umfassend ein Sensorattribut umfassen,
welches Sensorattribut eine durch einen Zahlenwert darstellbare Sensormessgröße umfasst, wobei ein Sensorsuchbereich mit einer unteren Sensorsuchbereichsgrenze und einer oberen Sensorsuchbereichsgrenze definiert wird und
die Sensoren aufweisend ein Sensorattribut markiert werden, welches Sensorattribut in den Sensorsuchbereich fällt, und wobei

eine einen Zahlenwert umfassende Sensorattributdifferenz ermittelt wird, um welche Sensorattributdifferenz sich das Sensorattribut des Sensors von einem Sensorsuchbereichswert unterscheidet.

Durch die Objektattribute wird im Wesentlichen eine Bewegung und/oder eine Eigenschaft eines Objektes beschrieben. Die Datenbank und sohin auch die forensische Suche in dieser Datenbank kann dadurch erweitert werden, dass auch Geräte, welche mit der Bewegung und/oder der Eigenschaft des Objektes in einem Zusammenhang stehen, berücksichtigt werden.
Im Regelfall umfasst ein Gerät eine elektrische Steuerung, wobei mit der Funktion des Gerätes zusammenhängende elektrische Impulse durch Sensoren gemessen werden und so Sensordaten umfassend ein Sensorattribut generiert werden.

Durch das Miteinbeziehen von Sensordaten kann das Suchergebnis genauer gestaltet werden. Dies ist insbesondere möglich, wenn die Objektattribute fehlerhaft sind.

Zum besseren Verständnis der Offenbarung der Erfindung wird diese anhand der nachfolgenden Figuren erläutert.

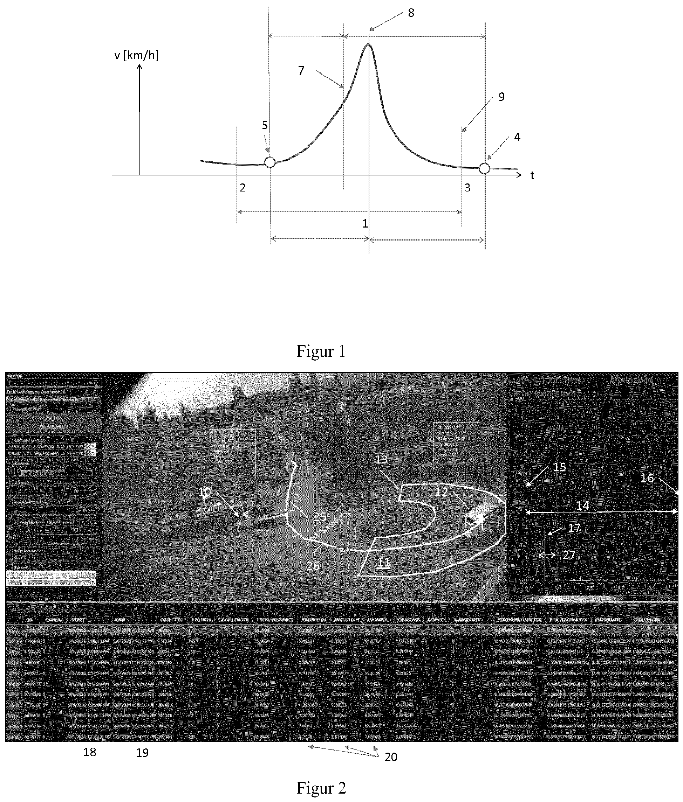

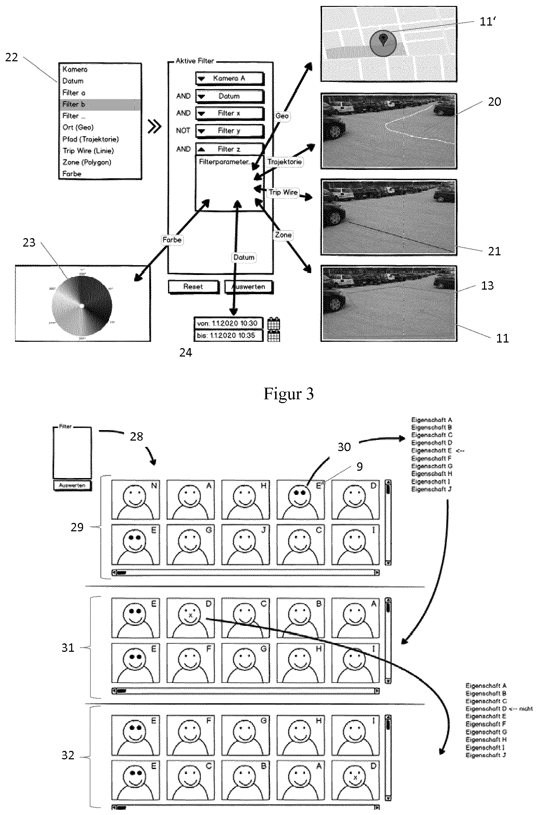

Figur 1 veranschaulicht das erfindungsgemäße Verfahren an einem einfachen Diagramm. Figur 2 und Figur 3 zeigen Anwendungen des erfindungsgemäßen Verfahrens.

Figur 1 zeigt ein Diagramm, in welchem Diagramm auf der Abszisse eine Zeit und auf der Ordinate Objektattribute aufgetragen sind. Der im Diagramm enthaltene Graph zeigt sohin den zeitlichen Verlauf eines Objektattributs.
Die Art des Objektattributs ist im Rahmen dieser Diskussion gleichgültig. Das Objektattribut kann beispielsweise die Geschwindigkeit v [km/h] eines Objektes sein.
Es wird der Objektsuchbereich 1 der durch das erfindungsgemäße Verfahren durchgeführten forensischen Suche durch eine untere Objektsuchbereichsgrenze 2 und durch eine obere Objektsuchbereichsgrenze 3 definiert. Es können Objekte aufweisend ein Objektattribut 4, 5 innerhalb des Objektsuchbereiches und außerhalb des Objektsuchbereiches gesucht werden. Das Objektattribut 4 liegt innerhalb des Suchbereiches 1; das Objektattribut 5 liegt außerhalb des Suchbereiches 1.

In Figur 1 sind beispielhaft zwei Objektattribute 4, 5 durch Kreise markiert. Nach dem erfindungsgemäßen Verfahren können einen Zahlenwert umfassende Objektattributdifferenzen ermittelt werden, um welche Objektattributdifferenzen sich die jeweiligen Objektattribute eines Objektes von einem im Objektsuchbereich 1 oder außerhalb des Objektsuchbereiches 1 gelegenen Objektsuchbereichswert unterscheiden.
Der Objektsuchbereichswert kann beispielsweise der Mittelwert 7 oder ein gewichteter Mittelwert 8 des Objektsuchbereiches 1 sein. Wie oben ausgeführt, können der Mittelwert 7 und der gewichtete Mittelwert 8 automatisch generiert werden.
Der Objektsuchbereich kann auch ein vom Benutzer gewählter Eingabewert 9 sein. Figur 1 veranschaulicht den Sonderfall, dass der Eingabewert 9 der oberen Suchbereichsgrenze 3 entspricht.

Es können die Objektattributdifferenzen berechnet werden, wobei in Figur 1 zur Wahrung der Übersichtlichkeit nur einige Objektattributdifferenzen durch Distanzpfeile dargestellt sind. Die Objektattributdifferenzen sind bei dem in Figur 1 dargestellten Beispiel Zahlenwerte (Angabe der Geschwindigkeit in Kilometer pro Stunde).

Figur 2 veranschaulicht eine Anwendung des erfindungsgemäßen Verfahrens, wobei die Figur 2 eine Benutzeroberfläche eines Programmes zur Durchführung des erfindungsgemäßen Verfahrens auf einem Computer zeigt. Es ist die Zielsetzung bei dem Anwendungsbeispiel, einen gesuchten Lieferwagen 10 in einem Datenmaterial zu finden.

Die Datenbank umfasst im Wesentlichen Bildmaterial, welches Bildmaterial mittels einer am Hauptsitz der Anmelderin angeordneten Überwachungskamera aufgenommen wurde. Die Überwachungskamera filmt den Vorplatz vor dem Bürogebäude der Anmelderin.

Unter Anwendung von Verfahren nach dem Stand der Technik können aus dem Bildmaterial die Eigenschaften und die Bewegungen von Objekten beschreibende Objektattribute extrahiert werden.

Es können somit unter anderem die Fahrzeuge (als Objekte) und Fahrzeugattribute beschreibend die Eigenschaften und die Bewegung der Fahrzeuge aus dem Bildmaterial extrahiert werden. Ein eine Bewegung eines Fahrzeuges beschreibendes Attribut kann beispielsweise eine Trajektorie und eine Angabe der Geschwindigkeit umfassen.

Es kann ein Zeitsuchbereich gewählt werden, welcher Zeitsuchbereich des Bildmaterials auf das Vorkommen des gesuchten Lieferwagens 10 untersucht werden soll. Unter der Annahme, dass der Zeitsuchbereich zu eng gewählt wird und der gesuchte Lieferwagen 10 aus dem gewählten Zeitsuchbereich fällt, kann wie im Folgenden diskutiert durch das erfindungsgemäße Verfahren der außerhalb des Zeitsuchbereiches fallende gesuchte Lieferwagen 10 dennoch gefunden werden.

Bei einer Ordnung der gefundenen Objekte nach dem Zeitsuchbereich würde ein außerhalb des Zeitsuchbereiches liegendes Objekt an einer nachrangigen Stelle gereiht werden. Bei einer Sortierung nach Objektparametern würde dieses Objekt an vorrangiger Stelle gereiht sein.

Es wird ein räumlicher Bereich 11 definiert, welchen räumlichen Bereich 11 üblicher Weise die Lieferwagen durchfahren, wenn Post in das Bürogebäude zugestellt wird. Die Auswahl des räumlichen Bereiches 11 kann durch eine grafische Auswahl unter Definition den Bereichssuchgrenzen 13 erfolgen. Durch die Auswahl des räumlichen Bereiches 11 und den Abgleich der den Bereich (als Objekt) beschreibenden Bereichsattribute wie Größe, Vektorangaben der Begrenzungspunkte mit den Fahrzeugattributen, insbesondere der Trajektorie 25 des gesuchten Lieferwagens 10 und der Trajektorie des weiteren Lieferwagens 12 kann ein Suchergebnis generiert werden, welches Fahrzeug im räumlichen Bereich 11 war. Es liegt hiermit ein binäres Kriterium vor.

Der gesuchte Lieferwagen 10 ist bei einer binären Liste über Lieferwagen, die nicht wie üblich im räumlichen Bereich 11 waren, an vorrangiger Stelle.

Es wird weiters in einem Farbhistogramm ein Farbsuchbereich 14 durch die Angabe von Farbsuchbereichsgrenzen 15, 16 definiert, wobei die Farbbereichsgrenzen so gewählt sind, dass der Farbsuchbereich 14 das gesamte angezeigte Farbhistogramm ausmacht. In Anlehnung an Zeugenaussagen kann der Benutzer einen Farbsuchbereichswert 17 mit circa 4 festlegen, sodass die Farbattributdifferenz der im Bildmaterial detektierten Fahrzeuge zu dem Farbsuchbereichswert 17 berechnet wird. Durch das erfindungsgemäße Verfahren können die Lieferwagen 10, 12 angezeigt werden, deren Farbe eine zu dem Farbsuchbereichswert 17 Farbattributdifferenz kleinergleich einem Schwellenwert aufweist. Der Schwellenwert ist zur Einschränkung des Suchergebnisses manuell wählbar. Die Wahl des Schwellenwertes entspricht einer Wahl eines Farbsuchteilbereiches bei gegebenenfalls gleichzeitiger Anzeige der Ergebnisse.

Ein auf den Farbwert von circa 4,0 gerichtetes Filterkriterium reiht die in Figur 2 angezeigten Lieferwagen 10, 12 an eine vorrangige Stelle.

Es sind weiters Objekteigenschaften der Objekte, insbesondere die Größe der Fläche eines Teiles der Fahrzeuge extrahierbar. So kann die Datenbank eine Größenangabe einer Fläche eines Fahrzeuges anzeigen. Bei dem in Figur 2 gezeigten Beispiel ist dies die Größe der Fläche der Lieferwagen 10, 12, welche eine möglichst geringe Farbattributdifferenz zu dem Farbsuchbereichswert 17 aufweist. In Figur 2 ist für den gesuchten Lieferwagen 10 eine Fläche mit 34,6 und für den anderen Lieferwagen 12 eine Fläche von 36,1 angegeben. Ebenso sind Angaben über die Breite und Höhe der jeweiligen Lieferwagen 10, 12 in Figur 1 enthalten.

Da sich die Flächen der Lieferwagen 10, 12 nur geringfügig unterscheiden, liefert diese Abfrage keine relevanten Ergebnisse.

Figur 2 umfasst unten eine tabellarische Darstellung der Objektattribute, wobei in den Zeilen die einzelnen Ereignisse wie das Erscheinen eines Lieferwagens 10, 12 im Bildbereich angeführt sind. Die in Figur 2 enthaltene Tabelle umfasst mehr Ereignisse als das Erscheinen der beiden Lieferwägen 10, 12.
Der Zeitbereich (Startzeit 18, Endzeit 19), die Größenparameter 20 (Breite, Höhe, Fläche) sind beispielhaft mit Bezugszeichen zu versehen. Der Benutzer kann die tabellarische Darstellung der Objektattribute nach einem dieser Objektattribute sortieren und die Objektsuchbereiche, insbesondere den Farbsuchbereich variieren. Der Benutzer kann so rasch und effizient den gesuchten Lieferwagen 10 interaktiv finden.

Werden mehrere Objektattribute unter einer wechselseitigen Verknüpfung der Objektattribute miteinander verknüpft, so können die Objektattribute beschreibend eine Bewegung und/oder eine Eigenschaft eines Objektes als Filter geschaltet werden.

Figur 3 zeigt im Feld Filterauswahl 22 eine beispielhafte Liste von Objektattributen, welche Objektattribute bei einer ein Bildmaterial umfassenden Datenbank ausgewählt werden können. Weiters stellt die Farbe des Objektes, welche Farbe ein Teil eines Farbkreises 23 ist, als ein Objektattribut ein mögliches Filterkriterium dar. Die durch den Zeitsuchbereich 24 gewählte Zeit bildet ein weiteres Filterkriterium.

Die Objektattribute werden durch Einschluss ("AND") und durch Ausschluss ("NOT") miteinander verknüpft, um so ein möglichst genaues Ergebnis der forensischen Suche unter Beachtung von durch Objektattributdifferenzen angebbaren Ähnlichkeiten zu erzielen.

Figur 3 zeigt welche räumlichen Objektsuchbereiche gewählt werden können. Der räumliche Bereich kann - wie in Figur 3a veranschaulicht - ein räumlicher Bereich 11' um eine Lokalität wie beispielsweise eine Adresse sein.

Der räumliche Bereich kann weiters durch eine Bereichstrajektorie 20 definiert werden. Die Suchbereichsgrenzen sind in diesem Fall ident, sodass eine Trajektoriendifferenz zwischen der Bereichstrajektorie 20 und einer in Figur 3 nicht dargestellten Trajektorie eines Objektes berechnet werden kann.

Der räumliche Bereich kann weiters durch eine Linie 21 definiert werden, durch welche Linie 21 eine Suchbereichsgrenze des Suchbereiches definiert wird. Die sozusagen gegenüberliegende Suchbereichsgrenze ist eine "unendliche" Suchbereichsgrenze, um über ein binäres Kriterium zu bewerten, ob eine in Figur 3 nicht eingezeichnete Trajektorie eines bewegten Objektes links oder rechts der Linie 21 verläuft.

Der räumliche Bereich 11 kann - wie dies bereits bei dem in Figur 2 dargestellten Ausführungsbeispiel gezeigt wurde - durch Bereichsgrenzen 13 definiert werden. Es kann das Vorkommen eines Objektes in dem Bereich 11 und außerhalb des Bereiches bewertet werden.

Die obigen Ausführungsbeispiele zeigen mögliche Ausführungsvarianten, wobei die Erfindung keinesfalls auf diese speziellen Ausführungsvarianten eingeschränkt sein muss, sondern vielmehr auch hier nicht explizit angeführte Kombinationen von Objektattributen möglich sind und diese Variationsmöglichkeiten aufgrund der Lehre zum technischen Handeln durch gegenständliche Erfindung im Können des auf diesem technischen Gebiet tätigen Fachmannes liegen. Unter Verweis auf das in Figur 2 gezeigte Ausführungsbeispiel ist der Fachmann in der Lage andere Objektattribute miteinander zu kombinieren.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Figur 4 veranschaulicht eine weitere Anwendung des erfindungsgemäßen Verfahrens. Über einen ersten Filter wird eine erste Reihe 29 von Bildern mit Gesichtern ausgewählt (Schritt erste Filterung 28). Die Gesichter weisen unterschiedliche Attribute auf, welche unterschiedlichen Attribute durch die Buchstaben A bis N abstrakt in der Figur 29 eingetragen sind.

Die in der ersten Reihe 29 dargestellten Bilder können beispielsweise durch mehrere Kameras aufgenommen worden sein, welche Kameras an unterschiedlichen Orten eines Gebäudes angeordnet sind. Wegen der Anzahl der Bilder sind nicht alle Bilder mit den Attributen A bis N in der ersten Reihe 29 dargestellt, was durch den Scroll-Balken angedeutet ist Die Bilder sind in einer Datenbank gespeichert.

Es kann die erste Aufgabe sein, die Bilder nach einem ersten Attribut zu sortieren, um so feststellen zu können, wie sich eine Person in dem Gebäude bewegte.

Der Benutzer wählt durch Auswahl des Gesichtes mit dem Attribut E das Attribut E als Eingabewert 9 aus (Verfahrensschritt Auswahl Bild 30). Es wird durch die Auswahl des Gesichtes mit dem Attribut E ein Objektsuchbereich mit einer unteren Objektsuchbereichsgrenze E und einer oberen Objektsuchbereichsgrenze E definiert. Die untere Objektsuchbereichsgrenze und die oberen Objektsuchbereichsgrenze sind sohin ident.

Der Benützer wünscht sohin eine Sortierung um diesen Eingabewert 9, wobei durch das erfindungsgemäße Verfahren eine einen Zahlenwert umfassende Objektattributdifferenz ermittelt wird, um welche Objektattributdifferenz sich das Objektattribut eines Gesichtes vom Eingabewert unterscheidet. Das Attribut A unterscheidet sich beispielsweise um den Zahlenwert 4 vom Eingabewert 9, weil A der vierte Buchstabe vor E ist. Das Attribut F unterscheidet sich beispielsweise um den Zahlenwert 1 vom Attribut E, weil F der erste Buchstabe nach E ist.

Die zweite Reihe 31 zeigt eine Sortierung der Gesichter nach dem Merkmale E, wobei die Gesichter mit dem Merkmal E am linken Rand angezeigt sind. Dier erste Zeile der zweiten Reihe 31 umfasst eine absteigende Sortierung. Die zweite Zeile der zweiten Reihe 31 umfasst eine ansteigende Sortierung, wobei nur die Bilder mit den Attributen E-I dargestellt sind. Die Bilder mit den Attributen J-N sind noch weiter vom Attribut E entfernt und würden in den nachfolgenden Zeilen angezeigt werden, was wiederum durch den Scroll-Balken angedeutet ist.

Die Reihung in der zweiten Reihe 31 ist für den Benutzer leicht nachvollziehbar. Anhand der zweiten Reihe 31 ist für den Benutzer nachvollziehbar, durch welche Kamera die Gesichter fotografiert wurden.

Die zweite Reihe 31 bietet dem Benutzer einen effektiven Überblick.

Es kann die zweite Aufgabe sein, die Bilder unter Ausschluss eines zweiten Attributs zu sortieren, um besser feststellen zu können, wie sich eine Person in dem Gebäude bewegte.

Durch die Auswahl des Bildes mit dem Attribut D in der zweiten Reihe 31 wird das Attribut ausgewählt, welches in der dritten Reihe 32 am wenigstens interessant ist. Es wird der Suchbereich sohin auf alle Attribute ausschließlich des Attributes D festgelegt.

Figur 4 zeigt die sich unter Anwendung des erfindungsgemäßen Verfahrens erstellte Ordnung, welche Ordnung in der dritten Reihe 32 dargestellt ist. Das Bild mit Merkmal D weist die größte Objektattributdifferenz auf und ist aus diesem Grund an einer untergeordneten Stelle dargestellt.

Die dritte Reihe 32 bietet dem Benutzer einen noch effektiveren Überblick.

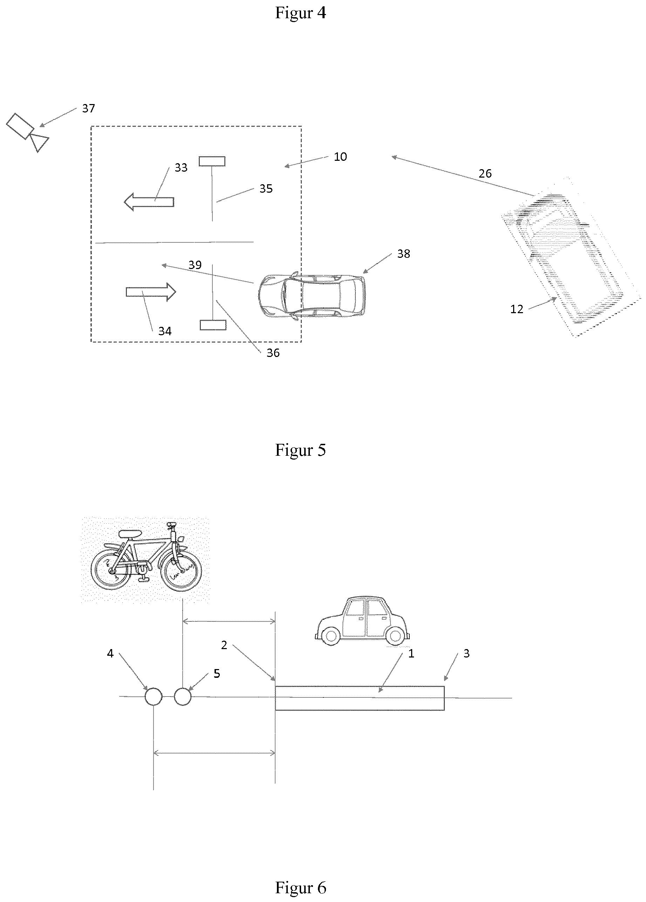

Figur 5 veranschaulicht eine weitere Anwendungsmöglichkeit des erfindungsgemäßen Verfahrens zur Detektion und Verifikation eines außergewöhnlichen Ereignisses. Im Wesentlichen liegt das Ziel der Anwendung des erfindungsgemäßen Verfahrens darin, ein entgegen einer Einbahnregelung fahrendes Fahrzeug aus einer Vielzahl von detektierbaren Objekten wie Autos, Fußgängern zu finden. Die mit der Anwendung des erfindungsgemäßen Verfahrens verbundene Problemstellung ist, dass ein Fahrzeug aus einem eine Vielzahl von detektierbaren Objekten umfassendes Bildmaterial nur schwer oder schlecht herausfilterbar ist. Dies ist insbesondere der Fall, wenn das Bildmaterial bei schlechten Bildverhältnissen aufgenommen wurde oder eine Reihe von nicht alltäglichen Objekten wie eine einen Zwillingskinderwagen schiebende Person von einem kleinen Auto unterschieden werden muss.

Figur 5 zeigt eine Ansicht von oben von einer Einfahrt, welche Einfahrt durch einen Einfahrtspfeil 33 symbolisiert ist, und von einer Ausfahrt, welche Ausfahrt durch einen Ausfahrtspfeil 34 symbolisiert ist. Die Einfahrt und die Ausfahrt umfassen einen Einfahrtsschranken 35 beziehungsweise einen Ausfahrtsschranken 36. Mittels einer Kamera 37 wird der Platz überwacht und ein Bildmaterial generiert.

Im Folgenden wird die Durchführung einer Reihe von Schritten diskutieren, wobei die Durchführung dieser Schritte auf der Anwendung des erfindungsgemäßen Verfahrens basiert. Der Fachmann erkennt weiters, dass die im Folgenden angeführte Reihung der einzelnen Schritte nicht bindend ist. Die Schritte können in einer beliebigen Reihenfolge durchgeführt werden.

Es ist Stand der Technik, aus dem Bildmaterial ein Objekt und die Trajektorie des Objektes zu extrahieren. Der Benutzer erhält eine Vielzahl von Objekten mit Trajektorien.

Beispielsweise kann das in Figur 5 eingetragene Auto 38 und die Trajektorie 39 des Autos 38 extrahiert werden. In gleicher Weise ist aus der Datenbank der Lieferwagen 12 mitsamt der Trajektorie 26 extrahierbar.

In einem ersten Schritt kann die Vielzahl der Trajektorien mit dem Einfahrtspfeil 33 und mit dem Ausfahrtspfeil 34 abgeglichen werden. Der Einfahrtspfeil 33 und der Ausfahrtspfeil 34 definieren hierbei mit ihren Richtungen Objektsuchbereiche, wobei eine temporäre Differenz (Objektattributdifferenz) der einzelnen Trajektorien (Objektattribute) zu den Richtungen berechnet werden kann. Der Fachmann erkennt aus Figur 5, dass die Trajektorien 39, 26 in einem sehr ähnlichen Ausmaß zu den Richtungen ähnlich beziehungsweise unterschiedlich sind. Das Ergebnis dieses ersten Abgleiches ist nach der Größe und/oder dem Betrag der Objejektattributdifferenz geordnet darstellbar.

In einem weiteren Schritt kann der Abstand der Objekte zu dem Bereich 10 untersucht werden. Der Bereich 10 ist in diesem Schritt der Objektsuchbereich. Der Abstand eines Objektes zu dem Bereich 10, insbesondere zu den Grenzen des Bereiches, stellt hierbei die Objektattributdifferenz dar. Der Fachmann erkennt, dass in Figur 5 das Auto 38 einen geringeren Abstand zu dem Bereich 10 aufweist als der Lieferwagen 12. Das Ergebnis dieses zweiten Abgleiches ist nach der Größe und/oder nach dem Betrag der Objektattributdifferenz darstellbar.

Zur Auffindung des gegen die Einbahnrichtung fahrenden Autos können die gefundenen Objekte noch mit den Zeiten abgeglichen werden, zu welchen der Schranken 36 geöffnet war oder die Funktion des Schrankens 36 gestört war. Ein geöffneter Schranken 36 ist Voraussetzung dafür, dass das Auto 38 entlang der Trajektorie 39 gegen die Einbahn einfahren kann oder beim Einfahren gegen den Schranken 36 fährt, worauf der Schranken 36 in seiner Funktion gestört ist. Es sind die Ergebnisse des ersten und des zweiten Abgleiches mit dem aus Sensordaten vorliegenden Zustandes des Schrankens 36 abgleichbar.

Durch die oben beschriebenen Abgleiche und die Sortierung der Ergebnisse nach den Objektattributdifferenzen kann das gegen die Einbahnrichtung einfahrende Auto effizient in dem Bildmaterial detektiert werden.

Figur 6 veranschaulicht eine mögliche Anwendung des erfindungsgemäßen Verfahren zur Erstellung von weiteren Datenbanken. Solche weiteren Datenbanken können beispielsweise automatisch oder semiautomatisch generierte Datenbanken sein, wobei bei der Generierung der weiteren Datenbank Objekte einer bestimmten Objektkategorie zugewiesen werden können.

Es kann Aufgabe sein, nach diesen Objekten in einer Datenbank zu suchen. Definitionsgemäß umfassen hierbei die Objekte ein Objektattribut, nach welchem Objektattribut in der Datenbank gesucht wird.

Figur 6 veranschaulicht die Anwendung, dass in einer Datenbank nach Autos gesucht wird. Es kann die Zuweisung eines Objektes in die Kategorie Auto beispielsweise nach dem Objektattribut des Umfassens von vier Rädern, Größe, Geschwindigkeit erfolgen.

Durch die Definition eines unteren Objektsuchbereiches 2 und eines oberen Objektsuchbereiches 3 kann der Benutzer einen Objektsuchbereich 1 definieren. Der Objektsuchbereich 1 definiert bei diesem Anwendungsbeispiel einen Kategoriebereich einer Kategorie, welcher Kategorie ein Objekt zugwiesen wird oder nicht zugewiesen wird.

Der Benutzer kann mehrere Objektsuchbereiche definieren, sodass unter Auschluß der nicht in die Objektsuchbereiche fallenden Objekte als Ergebnis ausschließlich Objekte einer Kategorie ausgegeben werden. Beispielsweise kann der Benutzer mehrere für ein Auto passende Objektsuchbereiche festlegen, um so als Ergebnis ausschließlich Objekte "Auto" zu erhalten.

Kann ein Objekt dieser Kategorie oder dem Objektsuchbereich 1 nicht zugewiesen werden, so weisen die Objektattribute 4, 5 Objektattributdifferenzen auf, welche in Figur 6 durch Distanzlinien beispielsweise zu der unteren Objektsuchgrenze symbolisiert sind. Aus der Größe einer Objektattributdifferenz und/oder der Objektattributdifferenzen kann der Fachmann eine Wahrscheinlichkeit berechnen, durch welche die Möglichkeit des Passens des Objektes in den Objektsuchbereich 1 angebbar ist.

Bei dem in Figur 6 veranschaulichten Beispiel wird ein Objekt Fahrrad nicht dem Objektsuchbereich zugeordnet, da dieses nicht vier, sondern nur zwei Räder umfasst.

Bei der Berechnung der Wahrscheinlichkeit ist eine Vielzahl von Faktoren wie beispielsweise die Art und Weise der Erstellung der Datenbank zu berücksichtigen. Unter Anwendung des erfindungsgemäßen Verfahrens können die außerhalb des Objektsuchbereiches 1 fallenden Objekte beziehungsweise Objektattribute - wie das in Figur 6 beispielhaft dargestellte Objektattribut 4, 5 - nach der Wahrscheinlichkeit geordnet werden, sodass ein Benutzer rasch einen

Überblick erhält. Der Benutzer kann insbesondere rasch einen Überblick darüber erhalten, ob eine manuelle Überprüfung der außerhalb des Objektsuchbereiches 1 fallenden Objekte beziehungsweise Objektattribute 4, 5 und eine eventuelle manuelle Zuweisung in den Objektsuchbereich 1 sinnvoll ist.

### Bezugszeichenaufstellung

- 1: Objektsuchbereich
- 2: Untere Objektsuchbereichsgrenze
- 3: Obere Objektsuchbereichsgrenze
- 4: Erstes Objektattribut
- 5: Zweites Objektattribut

- 6: (frei)
- 7: Mittelwert
- 8: Gewichteter Mittelwert
- 9: Eingabewert
- 10: Gesuchter Lieferwagen

- 11: Räumlicher Bereich
- 12: Weiterer Lieferwagen
- 13: Räumliche Bereichsgrenze
- 14: Farbsuchbereich
- 15: Untere Farbsuchbereichsgrenze

- 16: Obere Farbsuchbereichsgrenze
- 17: Farbsuchbereichswert
- 18: Startzeit
- 19: Endzeit
- 20: Objektbreite, Höhe und Fläche
- 21: Linie
- 22: Filterauswahl
- 23: Farbkreis
- 24: Zeitsuchbereich
- 25: Trajektorie Lieferwagen 10

- 26: Trajektorie Lieferwagen 12
- 27: Schwellenwert
- 28: Erste Filterung
- 29: Erste Reihe Gesichter
- 30: Auswahl Bild

- 31: Zweite Reihe Gesichter
- 32: Dritte Reihe Gesichter

## Patentansprüche

1. Computerimplementiertes Verfahren zur forensischen Suche nach einem Objekt in einer Datenbank,
welche Datenbank ein Objektattribut (4, 5) des Objektes umfasst, welches Objektattribut (4, 5) durch einen Zahlenwert und/oder eine Objekteigenschaft beschreibt oder eine Bewegung des Objektes durch einen Zahlenwert und/oder durch einen Vektor beschreibt,
wobei ein Objektsuchbereich (1) mit einer unteren Objektsuchbereichsgrenze (2) und einer oberen Objektsuchbereichsgrenze (3) definiert wird,
**dadurch gekennzeichnet, dass**
die Objekte aufweisend ein Objektattribut (4, 5) markiert werden, welcher Objektattributwert (4, 5) in den Objektsuchbereich (1) oder außerhalb des Objektsuchbereiches (1) fällt, und
eine einen Zahlenwert umfassende Objektattributdifferenz ermittelt wird, um welche Objektattributdifferenz sich das Objektattribut (4, 5) eines markierten Objektes von einem im Objektsuchbereich (1) oder außerhalb des Objektsuchbereiches (1) gelegenen Obj ektsuchbereichswert unterscheidet.

2. Verfahren nach Anspruch 1, **dadurch gekennzeichnet, dass**
die untere Objektsuchbereichsgrenze (2) und die obere Objektsuchbereichsgrenze (3) ident sind.

3. Verfahren nach Anspruch 1, **dadurch gekennzeichnet, dass**
die untere Objektsuchbereichsgrenze (2) und die obere Objektsuchbereichsgrenze (3) ein minimaler Zahlenwert oder Vektor beziehungsweise ein maximaler Zahlenwert oder Vektor der in der Datenbank gespeicherten Objektattribute (4, 5) ist.

4. Verfahren nach Anspruch 3, **dadurch gekennzeichnet, dass**
der die untere Objektsuchbereichsgrenze (2) beziehungsweise die obere Objektsuchbereichsgrenze (3) definierende Zahlenwert um einen Faktor erhöht wird.

5. Verfahren nach einem der Ansprüche 1 bis 4, **dadurch gekennzeichnet, dass**
der Objektsuchbereichswert ein Mittelwert zwischen der unteren Objektsuchbereichsgrenze (2) und der oberen Objektsuchbereichsgrenze (3) ist.

6. Verfahren nach einem der Ansprüche 1 bis 5, **dadurch gekennzeichnet, dass**
der der Objektsuchbereichswert ein statistischer Wert der in den Objektsuchbereich (1) fallenden Objektattribute (4, 5) ist.

7. Verfahren nach Anspruch 6, **dadurch gekennzeichnet, dass**
der Objektsuchbereichswert ein gewichteter Mittelwert der in den Objektsuchbereich (1) fallenden Objektattribute (4, 5) ist.

8. Verfahren nach Anspruch 6, **dadurch gekennzeichnet, dass**
der Objektsuchbereichswert ein Median der in den Objektsuchbereich (1) fallenden Objektattribute ist.

9. Verfahren nach einem der Ansprüche 1 bis 8, **dadurch gekennzeichnet, dass**
der Objektsuchbereichswert (1) durch den Benutzer wählbar ist.

10. Verfahren nach einem der Ansprüche 1 bis 9, **dadurch gekennzeichnet, dass**
die Datenbank durch einen Sensor ermittelbare und eine Funktion eines Gerätes beschreibende Sensordaten umfassend ein Sensorattribut umfasst,
welches Sensorattribut eine durch einen Zahlenwert darstellbare Sensormessgröße umfasst,
wobei ein Sensorsuchbereich mit einer unteren Sensorsuchbereichsgrenze und einer oberen Sensorsuchbereichsgrenze definiert wird und
die Sensoren aufweisend ein Sensorattribut markiert werden, welches Sensorattribut in den Sensorsuchbereich fällt, und wobei
eine einen Zahlenwert umfassende Sensorattributdifferenz ermittelt wird, um welche Sensorattributdifferenz sich das Sensorattribut des Sensors von einem Sensorsuchbereichswert unterscheidet.

## Geänderte Patentansprüche

### Geänderte Patentansprüche gemäss Regel 137(2) EPÜ.

1. Computerimplementiertes Verfahren zur forensischen Suche nach einem Objekt in einer Datenbank,
welche Datenbank einen Objektattributwert (4, 5) des Objektes umfasst, welcher Objektattributwert (4, 5) durch einen Zahlenwert und/oder durch einen Vektor eine Objekteigenschaft beschreibt oder eine Bewegung des Objektes durch einen Zahlenwert und/oder durch einen Vektor beschreibt,
wobei ein Suchbereich (1) der Objektattributwerte durch einen Benutzer mit einer unteren Suchbereichsgrenze (2) und einer oberen Suchbereichsgrenze (3) definiert wird, **dadurch gekennzeichnet, dass**
als Suchergebnis die Objekte aufweisend einen Objektattributwert (4, 5) detektiert werden, welcher Objektattributwert (4, 5) in den Suchbereich (1) oder außerhalb des Suchbereiches (1) fällt, und
eine einen ordenbaren Zahlenwert umfassende Objektattributwertdifferenz ermittelt wird, um welche Objektattributwertdifferenz sich der Objektattributwert (4, 5) eines detektierten Objektes von einem im Suchbereich (1) oder außerhalb des Suchbereiches (1) gelegenen Suchbereichswert unterscheidet.

2. Verfahren nach Anspruch 1, **dadurch gekennzeichnet, dass**
die untere Suchbereichsgrenze (2) und die obere Suchbereichsgrenze (3) ident sind.

3. Verfahren nach Anspruch 1, **dadurch gekennzeichnet, dass**
die untere Suchbereichsgrenze (2) und die obere Suchbereichsgrenze (3) ein minimaler Zahlenwert oder Vektor beziehungsweise ein maximaler Zahlenwert oder Vektor der in der Datenbank gespeicherten Objektattributwerte (4, 5) ist.

4. Verfahren nach Anspruch 3, **dadurch gekennzeichnet, dass**
der die untere Suchbereichsgrenze (2) beziehungsweise die obere Suchbereichsgrenze (3) definierende Zahlenwert um einen Faktor erhöht wird.

5. Verfahren nach einem der Ansprüche 1 bis 4, **dadurch gekennzeichnet, dass**
der Suchbereichswert ein Mittelwert zwischen der unteren Suchbereichsgrenze (2) und der oberen Suchbereichsgrenze (3) ist.

6. Verfahren nach einem der Ansprüche 1 bis 5, **dadurch gekennzeichnet, dass**
der der Suchbereichswert ein statistischer Wert der in den Suchbereich (1) fallenden Objektattributwerte (4, 5) ist.

7. Verfahren nach Anspruch 6, **dadurch gekennzeichnet, dass**
der Suchbereichswert ein gewichteter Mittelwert der in den Suchbereich (1) fallenden Objektattributwerte (4, 5) ist.

8. Verfahren nach Anspruch 6, **dadurch gekennzeichnet, dass**
der Suchbereichswert ein Median der in den Suchbereich (1) fallenden Objektattributwerte ist.

9. Verfahren nach einem der Ansprüche 1 bis 8, **dadurch gekennzeichnet, dass**
die Datenbank durch einen Sensor ermittelbare und eine Funktion eines Gerätes beschreibende Sensordaten umfassend einen Sensorattributwert umfasst,
welcher Sensorattributwert eine durch einen Zahlenwert darstellbare Sensormessgröße umfasst,
wobei ein Sensorsuchbereich mit einer unteren Sensorsuchbereichsgrenze und einer oberen Sensorsuchbereichsgrenze definiert wird und
die Sensoren aufweisend einen Sensorattributwert markiert werden, welcher Sensorattributwert in den Sensorsuchbereich fällt, und wobei
eine einen ordenbaren Zahlenwert umfassende Sensorattributdifferenz ermittelt wird, um welche Sensorattributdifferenz sich das Sensorattributwert des Sensors von einem Sensorsuchbereichswert unterscheidet.
